# EUROPÄISCHE PATENTANMELDUNG

(11) **EP 3 670 635 A1**
(43) Veröffentlichungstag der Anmeldung: **24.06.2020**
(21) Anmeldenummer: 18214858.5
(22) Anmeldetag: 20.12.2018
(51) Int. Cl.: C10L 3/10

(54) **VERFAHREN UND VORRICHTUNG ZUR HERSTELLUNG VON GASHYDRAT**

(71) Anmelder: Fachhochschule Vorarlberg GmbH, 6850 Dornbirn (AT)
(72) Erfinder: Arzbacher, Stefan, 6850 Dornbirn (AT); Rahmatian, Nima, 6850 Dornbirn (AT)
(74) Vertreter: Schwarz & Partner Patentanwälte OG

(57) **Zusammenfassung**

Verfahren zur Herstellung eines Gashydrats (9) aus einem Gastgas und Wasser, wobei das Gastgas in einen Reaktor (1) eingeleitet wird und der Gesamtdruck im Reaktor (1) auf > 1 bar eingestellt wird, wobei flüssiges Wasser in den Reaktor (1) eingebracht wird und die Temperatur des flüssigen Wassers oberhalb der Stabilitätstemperatur für das Gashydrat (9) gehalten wird, wobei das flüssige Wasser in einer Verdunstungseinrichtung oberhalb der Stabilitätstemperatur für das Gashydrat verdunstet wird, wobei mit Abstand zur Verdunstungseinrichtung (7) für das flüssige Wasser eine Kühleinrichtung (5) im Reaktor (1) vorgesehen ist, welche auf eine Temperatur unterhalb der Stabilitätstemperatur für das Gashydrat (9) gebracht wird, bis sich auf dieser Gashydrat (9) bildet.

## Beschreibung

Die vorliegende Erfindung betrifft ein Verfahren und eine Vorrichtung zur Herstellung von Gashydrat, wobei die gashydratbildenden Stoffe aus einem gasförmigen Gemisch unter Einstellung geeigneter Werte für Temperatur und Druck auf einer gekühlten Oberfläche das Gashydrat bilden.

### HINTERGRUND DER ERFINDUNG

Bei Clathraten handelt es sich um feste Einschlussverbindungen, bei denen Gastmoleküle wenigstens einer Art in ein Gitter oder in Käfige aus Wirtsmolekülen eingelagert sind. Einschlussverbindungen von Gastmolekülen in Käfigen aus Wassermolekülen bezeichnet man als Clathrathydrat. Sind die Gastmoleküle zusätzlich Stoffe, die unter Normbedingungen als Gas vorliegen, bezeichnet man die Einschlussverbindung auch als Gashydrat.

Gashydrate sind nur bei Drücken oberhalb eines temperaturabhängigen Mindestdruckes bzw. bei Temperaturen unterhalb einer druckabhängigen Höchsttemperatur thermodynamisch stabil. Mindestdruck und Höchsttemperatur (im weiteren Verlauf Stabilitätsdruck und Stabilitätstemperatur) entsprechen den Bedingungen an der Dreiphasengrenze Gas-Eis-Gashydrat bzw. Gas-Wasser-Gashydrat. Instabile Gashydrate zerfallen bei negativen Temperaturen (in der Celsiusskala) in die Produkte Gastgas und Eis, und bei positiven Temperaturen in die Produkte Gastgas und Wasser. Die Stabilitätsbedingungen für Gashydrate sind jeweils abhängig von der Art der Gastmoleküle sowie von der Clathrathydratstruktur. Ein Wachstum bzw. eine Synthese von Gashydrat ist nur unter Stabilitätsbedingungen möglich (Sloan, E. Dendy, und Carolyn Koh. Clathrate Hydrates of Natural Gases, Third Edition. CRC Press, 2007.).

Methan bildet in der Regel den Hauptteil des Gastgases in natürlich vorkommenden Gashydraten. Diese befinden sich in großen Mengen in Permafrostböden sowie in Sedimentschichten am Meeresboden und werden auch Methanhydrate genannt. Ein großer Teil der weltweiten Erdgasreserven ist in Form von Methanhydrat gebunden. Ein kontrollierter Abbau dieser Reserven ist für viele Länder von großem Interesse.

Die Speicherung von technisch und energiewirtschaftlich relevanten Gasen wie beispielsweise Methan, Ethan, Propan, Wasserstoff oder Kohlendioxid erfolgt bislang in der Regel in komprimierter Form unter hohem Druck oder in flüssiger Form bei tiefen Temperaturen. In beiden Fällen muss ein großer Teil des Energieinhaltes des gespeicherten Gases zur Herstellung der Lagerbedingungen verwendet werden. Die durch die kristalline Struktur bedingte, hohe Gastgasdichte sowie moderate Lagerbedingungen machen Gashydrate zu einer interessanten, sicheren und auch kostengünstigen Alternative zur Speicherung solcher Gase. Die Gase selbst können dabei fossilen Ursprungs (z.B. Gas aus On- und Offshore Gas- und Ölquellen oder Methanhydratlagerstätten) sein, oder aber auch synthetisch hergestellt werden (z.B. durch "Power-to-Gas" Prozesse).

Die selektive Abscheidung einzelner Gase aus einem Gasgemisch ist ein weiteres potenzielles Anwendungsgebiet von Gashydrat als Funktionsmaterial. So lässt sich beispielsweise das Treibhausgas Kohlendioxid aus dem Abgasstrom eines Kraftwerks absondern und in Form von Gashydrat über geologische Zeitskalen binden. Aus diesem Grund werden Gashydrate immer wieder als ein mögliches Mittel zur Einhaltung von Klimazielen diskutiert.

Lange Zeit versuchte man auch Gashydrat als Kohlendioxidquelle in der Nahrungsmittelindustrie zu etablieren. EP 0 355 875 B1 offenbart z.B. eine Vorrichtung zur Herstellung eines essbaren Gashydrats aus CO₂ und Wasser. Dabei wird Wasser und CO₂ in einen Turm eingeleitet, bis sich ein entsprechender Dampfdruck des Wassers aufbaut. Der Dampf wird anschließend in einen gekühlten Kondensationskessel geleitet, sodass sich das Gashydrat abscheidet.

Des Weiteren finden Gashydrate in der Entsalzung von Meerwasser Verwendung. Sie werden als energieeffizientes Kältemittel in Wärmepumpen und Klimaanlagen oder als Mittel zur effizienten Bekämpfung von Großfeuern eingesetzt.

### KURZBESCHREIBUNG DER ERFINDUNG

Trotz der vielseitigen Anwendungsfelder ist es nach wie vor schwierig, Gashydrate von hoher Qualität (d.h. ein hoher Molanteil Gas in Relation zum Molanteil Wasser) herzustellen und gleichzeitig die langsame Wachstumskinetik zu beschleunigen bzw. hoch zu halten.

Daher ist es Aufgabe der vorliegenden Erfindung, eine Vorrichtung zur Herstellung von Gashydraten sowie ein Verfahren zur Herstellung von Gashydraten bereitzustellen, mit welchen ein hoher Molanteil Gas zu Wasser bei hoher Herstellungsrate möglich ist.

Gelöst wird diese Aufgabe durch ein Verfahren zur Herstellung eines Gashydrats aus einem Gastgas und Wasser,
wobei das Gastgas in einen Reaktor eingeleitet wird und der Gesamtdruck im Reaktor auf > 1 bar eingestellt wird,
wobei flüssiges Wasser in den Reaktor eingebracht wird und die Temperatur des flüssigen Wassers oberhalb der Stabilitätstemperatur für das Gashydrat gehalten wird,
wobei das flüssige Wasser in einer Verdunstungseinrichtung oberhalb der Stabilitätstemperatur für das Gashydrat verdunstet wird,
wobei mit Abstand zur Verdunstungseinrichtung für das flüssige Wasser eine Kühleinrichtung im Reaktor vorgesehen ist, welche auf eine Temperatur unterhalb der Stabilitätstemperatur für das Gashydrat gebracht wird, bis sich auf dieser Gashydrat bildet.

Außerdem wird die Aufgabe gelöst durch eine Vorrichtung zur Herstellung eines Gashydrats mit einem Reaktor,
wobei der Reaktor eine Zuleitung für Gastgas und eine Zuleitung für flüssiges Wasser aufweist,
wobei im Reaktor eine Verdunstungseinrichtung für das zuleitbare flüssige Wasser vorhanden ist,
wobei im Reaktor eine Kühleinrichtung mit einer der Kühleinrichtung zugeordneten Gashydratwachstumsfläche vorgesehen ist, wobei die Gashydratwachstumsfläche zur Verdunstungseinrichtung für flüssiges Wasser beabstandet ist,
wobei eine Druckeinstelleinrichtung zur Regelung des Drucks im Reaktor vorgesehen ist,
wobei eine Regeleinrichtung zur Regelung der Verdunstungseinrichtung, der Kühleinrichtung und der Druckeinstellvorrichtung vorgesehen ist.

Bevorzugt ist vorgesehen, dass die Verdunstungseinrichtung eine Verdunstungsfläche aufweist, wobei die Regeleinrichtung über die Verdunstungseinrichtung die Temperatur der Verdunstungsfläche und über die Kühleinrichtung die Temperatur auf der Gashydratwachstumsfläche regelt, sodass die Temperatur der Verdunstungsfläche höher als die Temperatur auf der Gashydratwachstumsfläche ist.

Die erfindungsgemäße Vorrichtung und das erfindungsgemäße Verfahren vermeiden viele der unten näher beschriebenen bekannten Nachteile der in der Literatur bekannten Methoden und ermöglichen die Herstellung von hochreinem Gashydrat in einem einfach kontrollierbaren, wartungsarmen und gut skalierbaren Verfahren. Damit lassen sich neben Kleinstmengen für die Forschung auch große Mengen von Gashydrat für den industriellen Einsatz produzieren.

Die Erfindung umfasst ein Verfahren zur kontrollierten Kristallisation von Gashydrat eines gashydratbildenden Gases (Methan, Kohlendioxid, Erdgas, Wasserstoff, u.a. - nachfolgend Gastgas) ausgehend von einem Gemisch aus Wasserdampf und Gastgas an einer gekühlten und temperaturgeregelten Oberfläche, der Gashydratwachstumsfläche. Dabei wird in einem geschlossenen oder auch offenen thermodynamischen System die Konzentration des Wasserdampfes über der gekühlten Gashydratwachstumsfläche durch die Temperatur der Verdunstungsfläche, durch die Verdunstungsrate der Verdunstungseinrichtung, sowie durch einen Temperaturgradienten zwischen der Verdunstungseinrichtung und der dazu beabstandeten Gashydratwachstumsfläche eingestellt. Der Temperaturgradient treibt gleichzeitig über Konvektion und Diffusion den Massentransport von Wasser von der Verdunstungseinrichtung zur Gashydratwachstumsfläche. Bei gegebenen Temperaturen der Verdunstungseinrichtung und Gashydratwachstumsfläche lässt sich dieser über den Abstand der beiden Flächen zueinander festlegen. Die Konzentration des Gases wird über die Druckeinstelleinrichtung zur Regelung des Reaktordruckes eingestellt. Die wählbaren Parameter Temperatur des Wassers an der Verdunstungsfläche, Verdunstungsrate der Verdunstungseinrichtung, Temperatur der Gashydratwachstumsfläche, Abstand zwischen Verdunstungseinrichtung und Gashydratwachstumsfläche und Gasdruck werden im Verfahren so eingestellt, dass auf der gekühlten Gashydratwachstumsfläche ein Wachstum von Gashydrat gewünschter, meist bestmöglicher, Qualität einsetzt. Bevorzugt ist dabei das Gemisch aus Wasserdampf und Gastgas über der gekühlten Gashydratwachstumsfläche so einzustellen, dass keine Kondensation von flüssigem Wasser stattfindet. In diesem Fall ist die Konzentration des Wasserdampfes über der gekühlten Gashydratwachstumsfläche deutlich geringer als die Konzentration des Gastgases.

Das Verfahren sieht vor, dass Wasser in flüssiger Form in die Nähe des Ortes der beabsichtigten Kristallisation gebracht und dort bei einer Temperatur oberhalb der Stabilitätstemperatur für das Gashydrat gehalten wird. Ein Temperaturgradient zwischen dem Ort der Gashydratkristallisation (kalt) und dem Ort des flüssigen Wassers (warm) sorgt dafür, dass verdunstete Wassermoleküle über Diffusion und Konvektion an den Ort der Kristallisation geführt werden und dort gemeinsam mit den ohnehin in großer Zahl vorhandenen Gasmolekülen zu kristallisieren beginnen. Das Gas selbst steht unter Druck und kann auch als Gasgemisch (Gastgas mit katalytisch wirkenden Additiven oder Gastgas mit unerwünschtem Fremdgas) vorliegen.

Bevorzugt ist vorgesehen, dass kontinuierlich flüssiges Wasser und Gastgas dem Reaktor zugeführt werden. Die Zufuhr erfolgt idealerweise gemäß einem Fließgleichgewicht, d.h. es wird die gleiche Stoffmenge an Gastgas und Wasser zugeführt als durch die Gashydratbildung aus dem Gasraum des Reaktors abgeschieden wird.

Um die Bildung des Gashydrats zu beschleunigen, können dem Reaktor katalytische Additive zugesetzt werden. Beispielsweise können solche Additive aus der Stoffklasse der cyclischen Ether (vorzugsweise Tetrahydrofuran) ausgewählt sein.

In einer Ausführungsvariante des Verfahrens ist vorgesehen, dass das Gastgas Methan umfasst, wobei entsprechend der Stabilitätskriterien der Gesamtdruck im Reaktor auf 5 bar bis 100 bar eingestellt wird, wobei die Temperatur an der Verdunstungsfläche zwischen 20 °C und 100 °C beträgt, wobei die Temperatur an der Gashydratwachstumsfläche auf einen Wert zwischen -40 °C und 10 °C eingestellt wird, wobei der Abstand zwischen Gashydratwachstumsfläche und Verdunstungsfläche zwischen 0,5 cm und 100 cm beträgt.

In einer Ausführungsvariante des Verfahrens ist vorgesehen, dass das Gastgas Kohlenstoffdioxid umfasst, wobei entsprechend der Stabilitätskriterien der Gesamtdruck im Reaktor auf 3 bar bis 40 bar eingestellt wird, wobei die Temperatur an der Verdunstungsfläche zwischen 20 °C und 100 °C beträgt, wobei die Temperatur an der Gashydratwachstumsfläche auf einen Wert zwischen -40 °C und 10 °C eingestellt wird, wobei der Abstand zwischen Gashydratwachstumsfläche und Verdunstungsfläche zwischen 0,5 cm und 100 cm beträgt.

Neben den bereits im Zuge der Beschreibung des Verfahrens erörterten Merkmale der Vorrichtung, darf diese nachfolgend genauer erörtert werden. Zunächst weist der Reaktor eine Zuleitung für Gastgas und eine Zuleitung für flüssiges Wasser auf, damit der Reaktor mit Gastgas und Wasser befüllbar ist. Im Reaktor ist eine Verdunstungseinrichtung für das zuleitbare flüssige Wasser vorgesehen. Die Verdunstungseinrichtung stellt eine möglichst große Wasseroberfläche für das flüssige Wasser bereit und beschleunigt die Einstellung des gewünschten Wasserdampfpartialdrucks im Reaktor. Im einfachsten Fall ist der Verdunstungseinrichtung eine Temperiereinrichtung für das flüssige Wasser zugeordnet, um die Verdampfungsrate zu beeinflussen. Der Reaktor weist weiters eine Kühleinrichtung und eine Gashydratwachstumsfläche auf, wobei die Kühleinrichtung der Gashydratwachstumsfläche zugeordnet ist. An der Gashydratwachstumsfläche erfolgt die Abscheidung bzw. das Wachstum des Gashydrats. Die Gashydratwachstumsfläche weist zur Verdunstungseinrichtung für flüssiges Wasser einen (von null verschiedenen) Abstand auf, damit sich ein Temperaturgradient ausbilden kann. Der Abstand kann z.B. 0,5 bis 100 cm betragen. Weiters kann eine Ausleitung für die Ausschleusung des Gashydrats am Reaktor vorgesehen sein.

Weiters ist eine Druckeinstelleinrichtung zur Regelung des Drucks im Reaktor vorgesehen, um die korrekten Druckbedingungen im Reaktor einzustellen. Mittels einer Regeleinrichtung zur Regelung der Verdunstungseinrichtung, der Kühleinrichtung und der Druckeinstelleinrichtung werden die Temperatur des Wassers an der Verdunstungsfläche, die Verdunstungsrate und die Temperatur der Gashydratwachstumsfläche geregelt. Die Temperatur des Wassers an der Verdunstungsfläche wird im Betriebszustand auf einen Wert oberhalb der Stabilitätstemperatur für das Gashydrat geregelt und ist höher als die Temperatur auf der Gashydratwachstumsfläche.

Die Regeleinrichtung regelt außerdem die Druckeinstelleinrichtung, wobei über die Druckeinstelleinrichtung der Druck im Reaktor auf über 1 bar eingestellt wird. Die Regeleinrichtung kann weiters über die Zuleitung für Gastgas und eine Zuleitung für flüssiges Wasser die Menge an zugeführtem Gastgas und Wasser regeln.

Außerdem kann zwischen der Verdunstungseinrichtung für das zugeleitete flüssige Wasser und der Gashydratwachstumsfläche eine Fördervorrichtung zum Abtransport von Gashydrat vorgesehen sein. Hierfür kann z.B. ein Förderband Verwendung finden. In einer Ausführungsvariante ist die Gashydratwachstumsfläche auf der Fördervorrichtung bzw. dem Förderband angeordnet. Eine Abstreifvorrichtung kann in weiterer Folge Gashydrat von der Fördervorrichtung abstreifen.

In einer Ausführungsvariante ist weiters eine Schleusenkammer vorgesehen, welche dazu dient, dass Gashydrat aus dem Reaktor ausgeschleust werden kann. Hierfür kann z.B. die Fördervorrichtung mit der Schleusenkammer verbunden sein. Dadurch kann das gebildete Gashydrat in die Schleusenkammer transportiert und z.B. über die Abstreifvorrichtung in die Schleusenkammer überführt werden.

Die Verdunstungseinrichtung für flüssiges Wasser kann im einfachsten Fall durch eine Wanne im Reaktor gebildet werden. Die Temperiereinrichtung für Wasser ist dann der Wanne zugeordnet (z.B. als Heizeinrichtung in der Wanne). Daher ist in diesem Fall vorgesehen, dass die Verdunstungseinrichtung eine Wasserwanne, die vorzugsweise im Reaktor angeordnet ist, und eine Temperiereinrichtung in der Wasserwanne aufweist.

Alternativ dazu kann die Verdunstungseinrichtung für flüssiges Wasser aus einer Wand oder einem Teil der Wand im Reaktor gebildet werden und die Temperiereinrichtung für Wasser außerhalb des Reaktors angeordnet sein. In diesem Fall wird das flüssige Wasser außerhalb des eigentlichen Reaktors auf die entsprechende Temperatur gebracht und zur Verdunstungseinrichtung im Reaktor über die Zuleitung geführt. Beispielsweise kann die Verdunstungseinrichtung des Reaktors dann eine Seitenwand umfassen und über einen Sammelring unterhalb der Seitenwand flüssiges Wasser gesammelt und der Temperiereinrichtung wieder zugeführt werden. Ein Beispiel einer solchen Verdunstungseinrichtung wäre ein sogenannter Fallfilmverdampfer, bei dem kontinuierlich Wasser von oben an den Reaktorwänden herabfließt.

In einer Ausführungsvariante der Vorrichtung ist vorgesehen, dass die Druckeinstelleinrichtung im Reaktor den Druck auf 1 bar bis 100 bar, vorzugsweise 3 bar bis 100 bar, einstellt, wobei die Temperatur an der Verdunstungseinrichtung auf 20 °C bis 100 °C geregelt wird, wobei die Temperatur der Gashydratwachstumsfläche auf -40 °C bis 10 °C geregelt wird, wobei der Abstand zwischen Gashydratwachstumsfläche und Verdunstungseinrichtung zwischen 0,5 cm und 100 cm beträgt. Im Fall, dass die Zuleitung mit Methan verbunden wird, ist bevorzugt vorgesehen, dass die Druckeinstelleinrichtung im Reaktor den Druck auf 5 bis 100 bar einstellt.

Im Fall, dass die Zuleitung mit CO₂ verbunden wird, ist bevorzugt vorgesehen, dass die Druckeinstelleinrichtung im Reaktor den Druck auf 3 bar bis 40 bar einstellt.

Weiters kann vorgesehen sein, dass die Vorrichtung mehrere Reaktoren aufweist. Dabei kann vorgesehen sein, dass die Reaktoren einen gemeinsamen Reaktordeckel und/oder eine gemeinsame Bodenplatte aufweisen. Gemeinsamer Reaktordeckel oder gemeinsame Bodenplatte bedeutet, dass diese durchgängig und einteilig ist und sich über mehrere Reaktoren erstreckt. Der Reaktordeckel oder die Bodenplatte können dann Zuleitungen aufweisen, sodass sie die Funktion der Verteilung der Medien Gastgas und Wasser übernehmen können. Weiters kann der Reaktordeckel oder die Bodenplatte Leitungen oder Kanäle aufweisen, um die Funktion der Ausschleusung des Gashydrates übernehmen zu können.

In einem weiteren Aspekt betrifft die gegenständliche Erfindung die Verwendung der Vorrichtung zur Herstellung eines Gashydrats. Beispielsweise kann die Vorrichtung Teil eines physikochemischen Energiespeichers sein. Die Erfindung betrifft daher einen physikochemischen Energiespeicher, umfassend zumindest eine erste Vorrichtung der vorgenannten Art und zumindest eine zweite Vorrichtung der vorgenannten Art, wobei der Reaktor der ersten Vorrichtung sich im Reaktor der zweiten Vorrichtung befindet. Bevorzugt weisen die Reaktoren einen gemeinsamen Reaktordeckel und eine gemeinsame Bodenplatte auf. Der Reaktordeckel oder die Bodenplatte können dann Zuleitungen aufweisen, sodass sie die Funktion der Verteilung der Medien Gastgas und Wasser übernehmen können. Bevorzugt ist dabei vorgesehen, dass die Reaktoraußenwand des Reaktors der ersten Vorrichtung die Gashydratwachstumsfläche der zweiten Vorrichtung und die Reaktorinnenwand des Reaktors der ersten Vorrichtung die Gashydratwachstumsfläche der ersten Vorrichtung bilden, wobei erste Vorrichtung und zweite Vorrichtung eine gemeinsame Kühleinrichtung aufweisen.

Der große Vorteil der Erfindung gegenüber dem Stand der Technik, welcher meist flüssiges Wasser in der Gashydratwachstumszone zum Einsatz bringt, ist die Möglichkeit, ebendieses gänzlich auszuschließen zu können.

Im Fall von flüssigem Wasser in der Gashydratwachstumszone werden im Stand der Technik positive Produktionstemperaturen (in der Celsiusskala) verwendet, da die Gashydratbildung ansonsten direkt mit einer Wassereisbildung konkurriert und jeder Anteil von Eis im Endprodukt den Anteil von Gas pro Volumeneinheit verringert, und somit die Qualität des Gashydrates schmälert. Das im Beisein von flüssigem Wasser produzierte Gashydratprodukt enthält in der Regel einen beträchtlichen Anteil von flüssigem Wasser. Dieser Wasseranteil, welcher sich bei einer Speicherung des Produktes bei negativen Temperaturen (in der Celsiusskala) in Eis umwandelt, verringert wiederum die Qualität des Produktes. Um dem vorzubeugen werden so hergestellte Gashydrate nach der Produktion oft entwässert.

Mit der gegenständlichen Erfindung lässt sich Gashydrat auch bei negativen Temperaturen (in der Celsiusskala) herstellen. Da der Stabilitätsdruck mit sinkender Temperatur abnimmt, sind die hier erforderlichen Verfahrensdrücke damit deutlich geringer. Gleichzeitig lässt sich bei tieferen Temperaturen ein höherer Molanteil Gas pro Molanteil Wasser sowie erhöhte Wachstumsraten erreichen. Durch die Vermeidung von flüssigem Wasser in der Gashydratwachstumszone wird zudem eine aufwendige und energieintensive Entwässerung des Gashydratproduktes unnötig.

An der Grenzfläche zwischen flüssigem Wasser und Gas bildet sich beim Gashydratwachstum eine den Massentransport behindernde Grenzschicht aus, welche meist mit einem Rührwerk oder Mixer mechanisch durchbrochen wird. Dies erlaubt zwar eine Fortführung des Umwandlungsprozesses von Wasser und Gas zu Gashydrat, verhindert aber gleichzeitig das Wachstum von großen und zusammenhängenden Gashydratklumpen. Solche Gashydratklumpen zeichnen sich dadurch aus, dass sie auch im instabilen Bereich nur sehr langsam zerfallen. Damit lässt sich das Gas auch bei moderaten Druck- und Temperaturbedingungen über einen langen Zeitraum speichern.

Das gegenständliche Verfahren vermeidet eine den Massentransport behindernde Grenzschicht und zielt darauf ab, auch große, zusammenhängende Gashydratklumpen - bis hin zu Einkristallen - herzustellen.

In bekannten Gashydrat Herstellungsverfahren (z. Bsp. EP 0 355 875 B1), bei denen das Gashydrat aus einem Gemisch aus Wasserdampf und Gastgas gebildet wird, wird das Gemisch außerhalb des Reaktors erzeugt. Der Reaktor selbst ist gleichzeitig als Sammelbehälter ausgeführt. Das Gemisch aus Wasserdampf und Gastgas wird über Rohrleitungen an die gekühlte Reaktorwand geströmt, worauf sich dort das Gashydrat bildet.

In der gegenständlichen Erfindung wird die externe Erzeugung des Gemisches aus Wasserdampf und Gastgas bewusst vermieden. Bei der Zuführung eines solchen Gemisches über Rohrleitungen besteht die Gefahr einer Verstopfung der Rohrleitung durch unkontrollierte Gashydratbildung. Dieses Problem ist in der erdöl- und gasfördernden Industrie seit langem bekannt. Zudem ist, bedingt durch die schwer kontrollierbare Strömung des Gemisches aus Wasserdampf und Gastgas im Reaktor selbst, ein gleichmäßiges Wachstum des Gashydrates an den Wänden des Reaktors unwahrscheinlich. Eine Anhäufung von Gashydrat in einem ungünstigen Bereich des Reaktors kann zu einer unvollständigen Füllung des Reaktors (bzw. Sammelbehälters) und im schlimmsten Fall zu einer Verstopfung desselben führen. Eine genaue Regelung der Konzentrationen von Wasserdampf und Gas, sowie der Temperatur an der Reaktorwand ist, ebenfalls bedingt durch das strömende Gemisch aus Wasserdampf und Gastgas, sehr schwierig. Die gegenständliche Erfindung umgeht diese Probleme. Die Parameter Wasserdampfkonzentration, Gaskonzentration, Druck und Gashydratwachstumstemperatur sind am Ort des Gashydratwachstums unabhängig und sehr genau einstellbar. Der Ort des Gashydratwachstums ist genau definiert. Das gesamte Verfahren lässt sich sehr leicht regeln, und eine Verstopfung von Rohrleitungen ist ausgeschlossen.

### DETAILLIERTE BESCHREIBUNG DER ERFINDUNG

Weitere Vorteile und Details der Erfindung werden nachfolgend anhand von Beispielen und Figuren erläutert.

Es zeigt:
- Fig. 1: eine Prinzipskizze des Herstellungsverfahrens in einem Reaktor (rechts) und den Temperaturgradienten im Reaktor (links).
- Fig. 2: eine Prinzipskizze zur kontinuierlichen Herstellung von Gashydrat.
- Fig. 3: eine Ausführungsvariante einer Vorrichtung.
- Fig. 4: eine weitere Ausführungsvariante einer Vorrichtung.
- Fig. 5: eine weitere Ausführungsvariante einer Vorrichtung.
- Fig. 6: eine Anwendung einer Ausführungsvariante einer Vorrichtung.

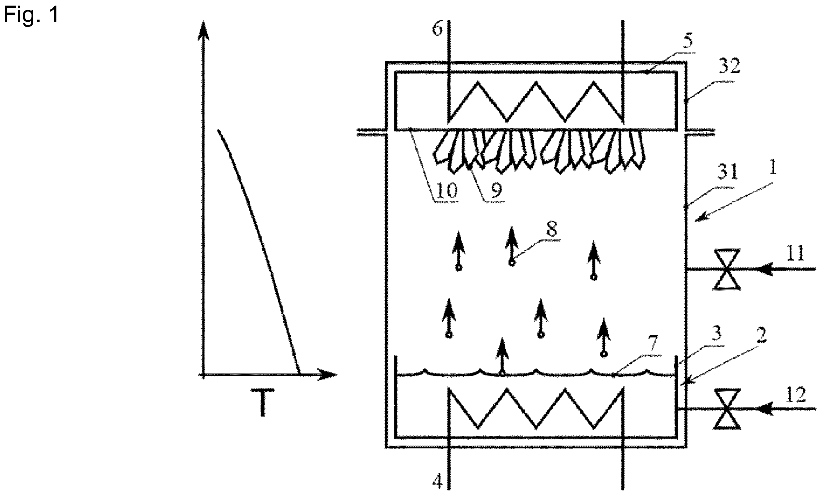

Fig. 1 veranschaulicht auf der rechten Seite sowohl die Verfahrensbedingungen als auch eine erste einfache Ausführungsvariante für die Vorrichtung. Diese umfasst einen Reaktor 1, bestehend aus einer Bodenplatte in Form einer Reaktorwanne 31 und einem Reaktordeckel 32. Am Boden der Reaktorwanne 31 befindet sich eine Verdunstungseinrichtung 2, welche eine Wasserwanne 3 aufweist, die im Betrieb mit einer Heizschlange oder einem Wärmeübertrager als Temperiereinrichtung 4 geheizt wird und in der die Wasseroberfläche 7 für die Verdunstung gebildet wird, wenn die Wasserwanne 3 mit Wasser gefüllt ist. Über die Verdunstungseinrichtung 2 wird das Wasser an der Wasseroberfläche 7 verdunstet, wobei über die Heizschlange 4 die Temperatur des Wassers eingestellt werden kann. Im Reaktordeckel 32 befindet sich eine Kühleinrichtung 5, welche im Betrieb durch einen Kühlkreislauf 6 gekühlt wird. Die Oberfläche der Kühleinrichtung 5 bildet die Gashydratwachstumsfläche 10. Der gesamte Reaktorraum wird über eine Zuleitung 11 mit Gastgas versorgt und unter Druck gesetzt. Die Temperatur der Gashydratwachstumsfläche 10 wird auf einen Wert unterhalb der Stabilitätstemperatur für das zu formende Gashydrat 9 eingestellt. Gleichzeitig wird die Temperatur an der Wasseroberfläche 7 auf einen Wert oberhalb der Stabilitätstemperatur geregelt. Dadurch herrschen an der Gashydratwachstumsfläche 10 stabile Bedingungen für das Gashydrat 9. An der Wasseroberfläche 7 ist hingegen kein Gashydratwachstum möglich. Die Wasseroberfläche 7 ist im Betrieb deutlich wärmer als die Gashydratwachstumsfläche 10. Dies ist zusätzlich im links abgebildeten Temperaturprofil dargestellt. An der Wasseroberfläche 7 verdunstende Wassermoleküle 8 bewegen sich somit durch Konvektion und Diffusion im Mittel nach oben in Richtung Kühleinrichtung 5. Dort kristallisieren sie zusammen mit den Gastgasmolekülen entweder als Gashydrat 9 auf bereits vorhandenem Gashydrat 9 oder auf der Gashydratwachstumsfläche 10 der Kühleinrichtung 5. Dies führt insgesamt zu einem kontinuierlichen Wassertransport von der Wasserwanne 3 hin zur Kühleinrichtung 5 und somit zu einem kontinuierlichen Gashydratwachstum. Der Wasserverlust in der Wasserwanne 3 wird über einen Zuleitung 12 für Wasser kompensiert. Die Verdunstung des Wassers kann auch über andere Wege erreicht bzw. durch andere Mittel unterstützt werden (z.B. Ultraschall, Agitation).

Nachfolgend werden konkrete Ausführungsvarianten der Erfindung beispielhaft beschrieben.

Der Druck im Reaktor 1 wird auf einen Wert oberhalb des Stabilitätsdruckes des verwendeten gashydratformenden Gastgases bei der beabsichtigten Temperatur auf der Gashydratwachstumsfläche 10 eingestellt. Ist beispielsweise die beabsichtigte Temperatur der Gashydratwachstumsfläche - 10°C, so wäre ein Druck von 40 bar bei Methan bzw. 15 bar bei Kohlendioxid ausreichend. Ein höherer Druck ist möglich, so lange eine Verflüssigung bzw. Verfestigung des Gastgases ausgeschlossen werden kann.

Die Temperatur der Gashydratwachstumsfläche 10 wird im Regelfall auf unter 0°C eingestellt. Bei ausreichend hohem Druck sind aber auch Temperaturen über 0°C möglich. Obwohl die Verwendung von tiefen Temperaturen die Vorteile erhöhter Wachstumskinetik und gesteigerter Gashydratqualität mit sich bringt, sind sehr tiefe Temperaturen aufgrund des erhöhten Energieaufwandes zur Kühlung der Gashydratwachstumsfläche 10 nicht zielführend. Typische Temperaturen der Gashydratwachstumsfläche 10 sind deswegen bevorzugt zwischen - 40°C und - 5°C angesiedelt.

Die Temperatur des flüssigen Wassers an der Verdunstungsfläche und die Verdunstungsrate der Verdunstungseinrichtung 2 werden so eingestellt, dass sich über der Gashydratwachstumsfläche 10 ein geeignetes Mischverhältnis von Gastgas zu Wasser ergibt. Das maximal sinnvolle Molverhältnis bei einem kubischen Strukturtyp sI Gashydrat 9 (Methan, Kohlendioxid, u.a.) ist 1 mol Gastgas auf 5.75 mol Wasser. Dieses entspricht dem stöchiometrischen Verhältnis eines völlig besetzten sI Gashydrates. Bei Gashydraten 9 vom Strukturtyp sII ist das stöchiometrische Verhältnis 1 mol Gastgas auf 5.67 mol Wasser. Typischerweise wird man das Verfahren bei einem deutlich geringeren Wasseranteil betreiben, um die Kondensation von Wasser an der Wand des Reaktors 1 gering zu halten. Ist ein vorrichtungsabhängiges optimales Molverhältnis bestimmt, lässt sich die Temperatur der Wasseroberfläche 7 an der Verdunstungseinrichtung 2 über Dampfdrucktabellen einstellen. Es bleibt zu beachten, dass die Temperatur der Wasseroberfläche 7 über der Stabilitätstemperatur des zu bildenden Gashydrates 9 liegt, um ein Gashydratwachstum auf der Verdunstungsfläche 7 zu verhindern. Bevorzugte Temperaturen der Verdunstungsfläche liegen zwischen 10°C und 250°C. Durch einen ausreichend hohen Druck im Reaktor 1 wird das Wasser auch bei 250°C nicht sieden.

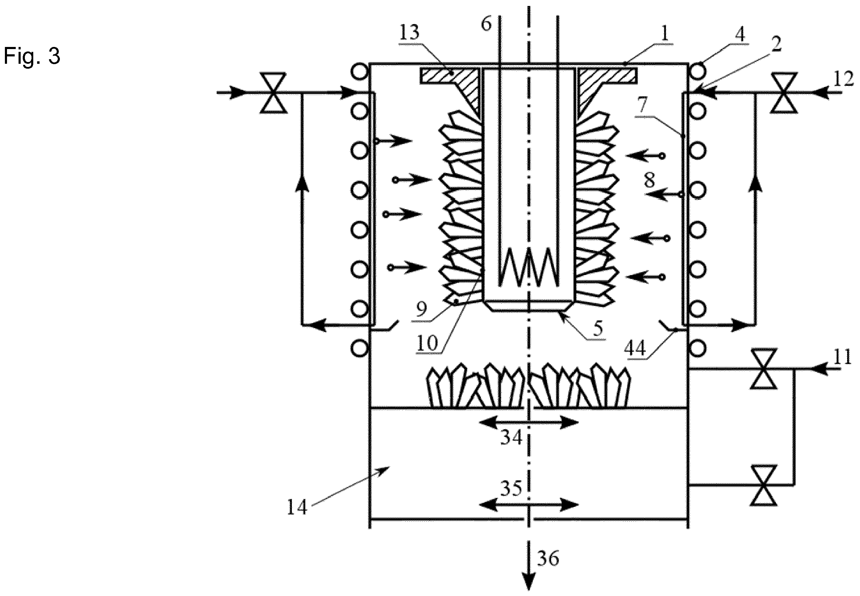

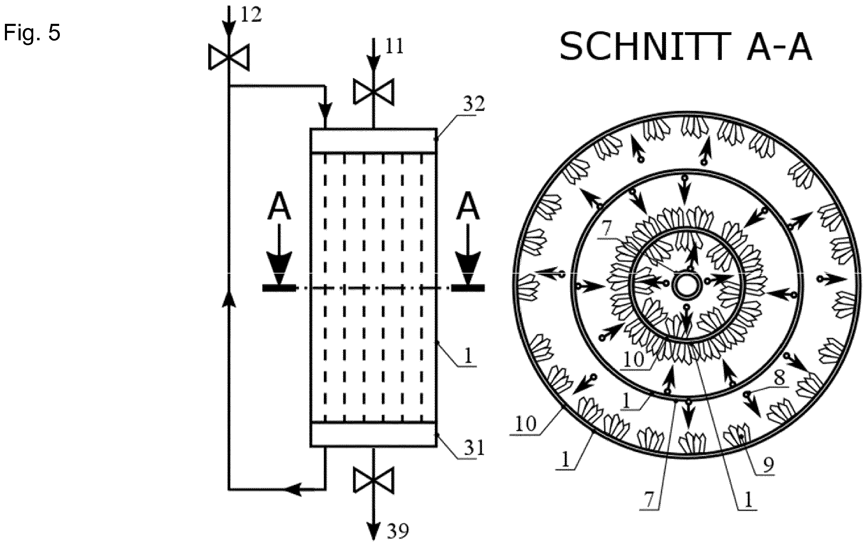

Der Temperaturgradient ist stetig, hat in etwa konstanten Betrag, und ist von der kälteren Gashydratwachstumsfläche 10 zur wärmeren Wasseroberfläche 7 gerichtet. Er wird bestimmt durch die Temperaturen an der Wasseroberfläche 7 und der Gashydratwachstumsfläche 10 sowie durch den Abstand zwischen den beiden Flächen. Sinnvolle Gradienten bewegen sich zwischen 0,1 K/cm und 100 K/cm. Wählt man eine Temperatur von - 20°C für die Gashydratwachstumsfläche 10 und eine Temperatur von 100°C für die Wasseroberfläche 7 ergibt sich bei einem Temperaturgradienten von 10 K/cm ein Abstand von 12 cm zwischen den beiden Flächen 7, 10 (typisch für Fig. 3). Bei einer Temperatur der Gashydratwachstumsfläche 10 von - 20°C und einer Temperatur der Wasseroberfläche 7 von 30°C ergibt sich bei einem Temperaturgradienten von 50 K/cm ein Abstand von 1 cm zwischen den Flächen 7, 10 (typisch für Fig. 5).

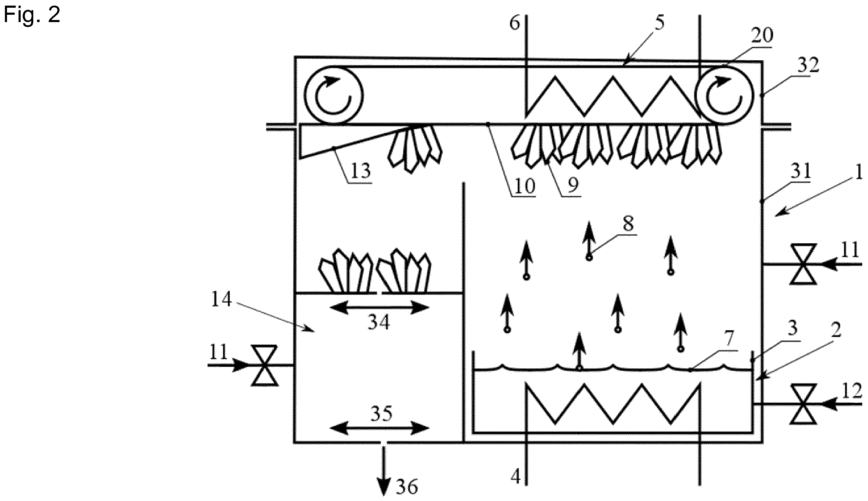

Fig. 2 zeigt eine Vorrichtung zur kontinuierlichen Produktion und zum Abtransport von Gashydrat. Die Bedingungen sowie die Prozessbeschreibung sind analog zur Beschreibung von Fig. 1. Der Reaktor 1 wird in diesem Fall jedoch um eine gekühlte Schleusenkammer 14 erweitert. Vor der Kühleinrichtung 5 kommt außerdem ein Förderband 20 zum Einsatz. Das Gashydrat 9 kristallisiert auf der Gashydratwachstumsfläche 10 des gekühlten Förderbandes 20 und wird kontinuierlich von der Wachstumszone wegbewegt. Eine mechanische Abstreifvorrichtung 13 löst das Gashydrat 9 vom Förderband 20. Das gelöste Gashydrat 9 fällt aufgrund seines Eigengewichtes auf den Eingang 34 der gekühlten Schleusenkammer 14. Beim Entladevorgang wird die Schleusenkammer 14 zunächst mit (vorgekühltem) Gastgas unter Druck gesetzt. Nachdem in der Schleusenkammer 14 der Druck des Reaktors 1 erreicht wurde, wird der Schleuseneingang 34 geöffnet und das Gashydrat 9 fällt in die Schleusenkammer 14. Anschließend wird der Schleuseneingang 34 wieder geschlossen und es kann sich erneut Gashydrat 9 sammeln. Am Schleusenausgang 35 lasst sich so ein intermittierender Strom 36 von Gashydrat 9 erzeugen.

Fig. 3 zeigt eine erfindungsgemäße Vorrichtung mit kreiszylinderförmigem Aufbau des Reaktors 1. Es gelten wiederum die Prozessbedingungen wie zu Fig. 1 und 2 beschrieben. Im Zentrum eines kreiszylinderförmigen Reaktors 1 befindet sich ein gekühlter Stab/Kern als Kühleinrichtung 5, an dessen Oberfläche die Gashydratwachstumsfläche 10 gebildet wird. Die Verdunstungseinrichtung 2 heizt den oberen Teil der Zylinderwand des Reaktors 1 im Betrieb über eine Heizschlange 4. Über eine Zuleitung 12 wird kontinuierlich vortemperiertes Wasser entlang der warmen Zylinderwand des Reaktors 1 geführt, wo sich die Wasseroberfläche 7 bildet, und dort verdampft. Nicht verdampftes Wasser wird im unteren Bereich des Reaktors 1 über eine Rinne 44 wieder gesammelt und in einem Wasserkreislauf zurückgeführt. Der Reaktor 1 wird über einen Zuleitung 11 mit Gastgas versorgt und unter Druck gesetzt. Die Kühleinrichtung 5 wird über einen Kühlkreislauf 6 gekühlt. Das verdampfte Wasser 8 wird über Diffusion und Konvektion zur zylinderförmigen Kühleinrichtung 5 transportiert und kristallisiert an der Gashydratwachstumsfläche 10 als Gashydrat 9. Nachdem die beabsichtigte Gashydratschichtdicke erreicht wurde, lässt sich das Gashydrat 9 mechanisch über eine Abstreifvorrichtung 13 in Form eines Schabers von der Gashydratwachstumsfläche 10 lösen. Alternativ führt auch ein kurzzeitiges Erwärmen der Gashydratwachstumsfläche 10 zum Ablösen des Gashydrates 9 von der Kühleinrichtung 5. Dies kann durch eine vorübergehende Verwendung des Kühlkreislaufes 6 als Heizung erreicht werden. Im unteren Bereich des Reaktors 1 befindet sich eine gekühlte Schleusenkammer 14, welche analog zur Beschreibung zu Fig. 2 betrieben wird. Das gelöste Gashydrat 9 fällt bedingt durch sein Eigengewicht auf den Schleuseneingang 34 und kann von dort weg über den Schleusenausgang 35 ausgeleitet werden.

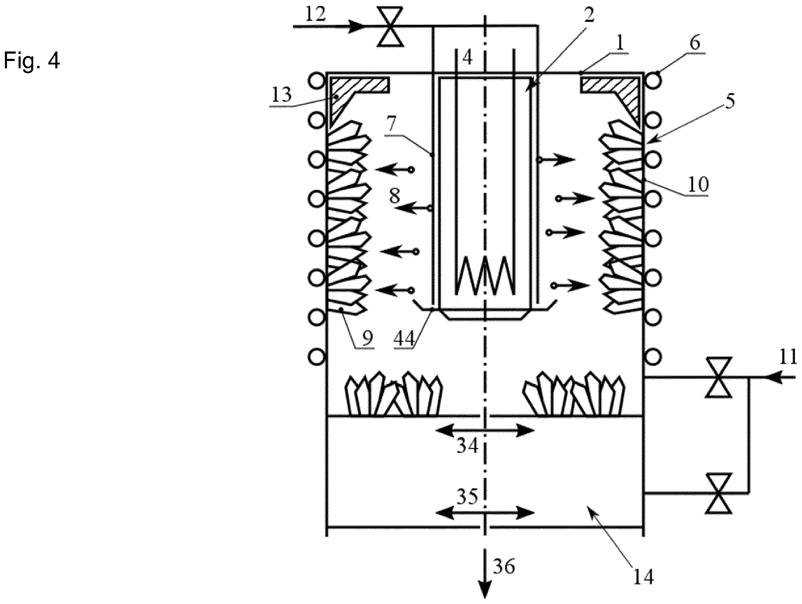

Fig. 4 zeigt eine Ausführungsvariante der Vorrichtung aus Fig. 3, bei welcher die Verdunstungsfläche und die Gashydratwachstumsfläche vertauscht wurden. In der hier dargestellten Ausführung wird die Reaktorwand gekühlt und bildet die Gashydratwachstumsfläche 10 während der Stab/Kern im Zentrum des Reaktors 1 die Verdunstungseinrichtung 2 bildet. Jede der beiden Varianten ist gleichermaßen möglich. Eine Bevorzugung einer der beiden Varianten ergibt sich aus den gewählten Betriebsbedingungen. Hierbei spielt vor allem das Verhältnis der Kristallisations- zur Verdunstungsfläche eine wesentliche Rolle.

Fig. 5 zeigt einen physikochemischen Energiespeicher. Der physikochemische Energiespeicher umfasst zumindest zwei erfindungsgemäße Vorrichtungen wie zuvor beschrieben, wobei der Reaktor 1 der ersten Vorrichtung sich im Reaktor 1 der zweiten Vorrichtung befindet. Da der physikochemische Energiespeicher wiederaufladbar ist kann dieser als Gashydratakkumulator verwendet bzw. bezeichnet werden. Hierfür wird Energie in Form von Gastgas im Gashydrat 9 gespeichert und bei Bedarf zu bzw. abgeführt (ebenfalls in Form von Gaszu- bzw. -abfuhr). Der physikochemische Energiespeicher besteht aus mehreren kreiszylindrisch angeordneten Reaktoren 1, einem gemeinsamen Reaktordeckel 32 und einer gemeinsamen Bodenplatte 31. Die Funktion von Reaktordeckel 32 und Bodenplatte 31 besteht im Wesentlichen darin, die Medien Wasser und Gastgas in geeigneter Form zu verteilen bzw. wieder zu sammeln. In den Reaktoren 1 wechseln sich nacheinander geheizte und gekühlte Reaktorwände ab. Dabei wird Wasser jeweils an der geheizten Reaktorwand, welche die Wasseroberfläche 7 bildet, verdampft und an den gegenüberliegenden gekühlten Reaktorwänden, welche die Gashydratwachstumsfläche 10 bilden, zusammen mit dem Gastgas als Gashydrat 9 abgeschieden. Die Plätze der warmen und kalten Reaktorwände können in den unterschiedlichen Phasen des Betriebes (Laden, Speichern, Entladen) vertauscht werden. Dies ist im Allgemeinen aber nicht zwingend nötig.

Beim Ladevorgang (i.e. die Umwandlung von Wasser und Gastgas in Gashydrat) strömen über die Zuleitung 11 für Gastgas und über die Zuleitung 12 für flüssiges Wasser Gastgas und flüssiges Wasser in den Reaktor 1. Nach dem Einstellen der Gashydratwachstumsbedingungen wandert Wasserdampf 8 von der wärmeren Reaktorwand zu den kälteren Reaktorwänden und wächst dort als Gashydrat 9 an. Während der Speicherung des Gastgases werden alle Reaktorwände auf eine Temperatur gekühlt, bei der das Gashydrat 9 stabil ist bzw. nur sehr langsam zerfällt. Moderate Temperaturen knapp unterhalb des Gefrierpunktes von Wasser (z.B. -15°C) sind ökonomisch sinnvoll. Da während der Speicherung jeder Zerfall des Gashydrates 9 mit einer Erhöhung des Druckes im druckdichten Reaktor 1 einhergeht, stellt sich nach einiger Zeit ein Druck ein, bei dem das Gashydrat 9 wieder stabil ist. Bei einer hohen Speicherdichte ist damit der erwartbare Schwund auch bei moderaten Temperaturen vernachlässigbar. Beim Entladevorgang werden alle Reaktorwände kontrolliert erwärmt, bis das Gashydrat 9 komplett zerfallen und das gesamte gespeicherte Gastgas über den Ausgang 39 abgeführt wurde. Der Speicher kann nun erneut gefüllt werden. Natürlich lässt sich ein ähnlicher Akkumulator auch in einer rechteckigen Form mit geraden planaren Kühl- bzw. Heizplatten ausführen. Die Heizung und Kühlung der Reaktorwände kann auf verschiedene Arten erfolgen. Eine Möglichkeit besteht in der Durchführung von Heiz- bzw. Kühlschlangen, aber auch thermoelektrische Kühlelemente (Peltierelemente) sind denkbar. Die Verdampfung des Wassers kann nach dem Prinzip eines Fallfilmverdampfers erfolgen bei dem kontinuierlich Wasser von oben an den Reaktorwänden herabfließt. Auch eine Ausführung ohne kontinuierlichem Wasseraustausch ist möglich: Geeignete Beschichtungen der Reaktorwände (z.B. superhydrophile Oberflächen, Graphitfilz) erlauben, relativ große Mengen an Wasser auf der Oberfläche festzuhalten. Das Wasser wandert dann während etlicher Ladezyklen zwischen den einzelnen Reaktorwänden hin und her, während es etliche Male zu Gashydrat umgewandelt wurde. Lediglich der Schwund in Form von Wasserdampf, welcher mit dem Gas durch den Ausgang 39 den physikochemischen Energiespeicher verlässt, muss ersetzt werden.

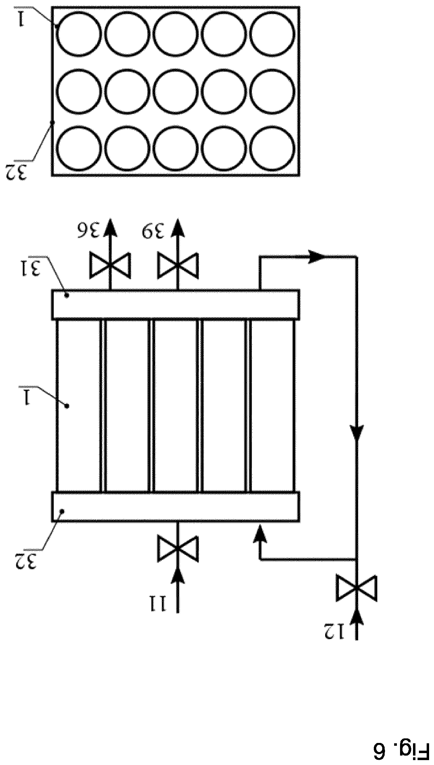

Figur 6 zeigt die Vereinigung mehrerer Gashydratreaktoren zu Bündeln. In einigen Anwendungsbereichen (insbesondere bei solchen, die hohe Drücke erfordern) kann es vorteilhaft sein, Reaktoren 1, wie sie in den Fig. 3, 4 und 5 beschrieben wurden, zu Bündeln zusammenzufassen. Die Bündel werden dabei über einen Reaktordeckel 32 und eine Bodenplatte 31 zu einer Einheit verbunden. Die Funktion der Reaktordeckel 32 und Bodenplatte 31 beschränkt sich im Wesentlichen auf die Verteilung der Medien Wasser und Gastgas. Das Medium Wasser kann beispielsweise an einer Stelle über die Zuleitung 12 zugeführt werden und in einem Kreislauf geführt werden. Gas kann beispielsweise an einer Stelle über die Zuleitung 11 zugeführt bzw. an Stelle 39 abgegriffen werden. Die Bodenplatte 31 kann zudem so ausgeführt sein, dass ein Ausschleusen des Gashydrates 9 über einen gemeinsamen Ausgang 36 möglich ist.

## Patentansprüche

1. Verfahren zur Herstellung eines Gashydrats (9) aus einem Gastgas und Wasser,
wobei das Gastgas in einen Reaktor (1) eingeleitet wird und der Gesamtdruck im Reaktor (1) auf > 1 bar eingestellt wird,
wobei flüssiges Wasser in den Reaktor (1) eingebracht wird und die Temperatur des flüssigen Wassers oberhalb der Stabilitätstemperatur für das Gashydrat (9) gehalten wird, wobei das flüssige Wasser in einer Verdunstungseinrichtung oberhalb der Stabilitätstemperatur für das Gashydrat verdunstet wird,
wobei mit Abstand zur Verdunstungseinrichtung (7) für das flüssige Wasser eine Kühleinrichtung (5) im Reaktor (1) vorgesehen ist, welche auf eine Temperatur unterhalb der Stabilitätstemperatur für das Gashydrat (9) gebracht wird, bis sich auf dieser Gashydrat (9) bildet.

2. Verfahren nach Anspruch 1, **dadurch gekennzeichnet, dass** kontinuierlich flüssiges Wasser und Gastgas zugeführt werden.

3. Verfahren nach Anspruch 1 oder Anspruch 2, **dadurch gekennzeichnet, dass** dem Reaktor (1) katalytische Additive zugesetzt werden.

4. Vorrichtung zur Herstellung eines Gashydrats (9) mit einem Reaktor (1),
wobei der Reaktor (1) eine Zuleitung (11) für Gastgas und eine Zuleitung (12) für flüssiges Wasser aufweist,
wobei im Reaktor (1) eine Verdunstungseinrichtung (2) für das zuleitbare flüssige Wasser vorhanden ist,
wobei im Reaktor (1) eine Kühleinrichtung (5) mit einer der Kühleinrichtung (5) zugeordneten Gashydratwachstumsfläche (10) vorgesehen ist, wobei die Gashydratwachstumsfläche (10) zur Verdunstungseinrichtung (2) für flüssiges Wasser beabstandet ist,
wobei eine Druckeinstelleinrichtung zur Regelung des Drucks im Reaktor (1) vorgesehen ist,
wobei eine Regeleinrichtung zur Regelung der Verdunstungseinrichtung (2), der Kühleinrichtung (5) und der Druckeinstellvorrichtung vorgesehen ist.

5. Vorrichtung nach Anspruch 4, **dadurch gekennzeichnet, dass** die Verdunstungseinrichtung (2) eine Verdunstungsfläche aufweist, wobei die Regeleinrichtung über die Verdunstungseinrichtung (2) die Temperatur der Verdunstungsfläche und über die Kühleinrichtung (5) die Temperatur auf der Gashydratwachstumsfläche regelt, sodass die Temperatur der Verdunstungsfläche höher als die Temperatur auf der Gashydratwachstumsfläche (10) ist.

6. Vorrichtung nach Anspruch 4 oder Anspruch 5, **dadurch gekennzeichnet, dass** die Regeleinrichtung, den Druck im Reaktor (1) auf über 1 bar und die Verdunstungseinrichtung (2) auf eine Temperatur oberhalb der Stabilitätstemperatur für das Gashydrat (9) und die Kühleinrichtung (5) auf eine Temperatur unterhalb der Stabilitätstemperatur für das Gashydrat (9) regelt.

7. Vorrichtung nach einem der Ansprüche 4 bis 6, **dadurch gekennzeichnet, dass** zwischen der Verdunstungseinrichtung (2) und der Kühleinrichtung (5) eine Fördervorrichtung (20) zum Abtransport von Gashydrat (9) vorgesehen ist.

8. Vorrichtung nach einem der Ansprüche 4 bis 7, **dadurch gekennzeichnet, dass** die Verdunstungseinrichtung (2) zusätzlich eine Agitationseinrichtung aufweist.

9. Vorrichtung nach einem der Ansprüche 4 bis 8 **dadurch gekennzeichnet, dass** die Verdunstungseinrichtung (2) von einer Wand im Reaktor (1) und einer Temperiereinrichtung (4), gebildet wird, wobei die Temperiereinrichtung (4) vorzugweise außerhalb des Reaktors (1) angeordnet ist.

10. Vorrichtung nach einem der Ansprüche 4 bis 9, **dadurch gekennzeichnet, dass** eine Schleusenkammer (14) vorgesehen ist, welche mit dem Reaktor (1), gegebenenfalls über eine Fördervorrichtung (20), verbunden ist.

11. Vorrichtung nach einem der Ansprüche 4 bis 10, **dadurch gekennzeichnet, dass** eine Abstreifvorrichtung (13) an der Fördervorrichtung (20) vorgesehen ist, welche das Gashydrat (9) von der Fördervorrichtung (20) löst.

12. Vorrichtung nach einem der Ansprüche 4 bis 11, **dadurch gekennzeichnet, dass** mehrere Reaktoren (1) vorgesehen sind.

13. Vorrichtung nach Anspruch 12, **dadurch gekennzeichnet, dass** die Reaktoren (1) einen gemeinsamen Reaktordeckel (32) und/oder eine gemeinsame Bodenplatte (31) aufweisen.

14. Physikochemischer Energiespeicher, umfassend zumindest eine erste Vorrichtung nach einem der Ansprüche 4 bis 13 und zumindest eine zweite Vorrichtung nach einem der Ansprüche 4 bis 13, wobei der Reaktor (1) der ersten Vorrichtung sich im Reaktor (1) der zweiten Vorrichtung befindet.

15. Physikochemischer Energiespeicher nach Anspruch 14, **dadurch gekennzeichnet, dass** die Reaktoraußenwand des Reaktors (1) der ersten Vorrichtung die Gashydratwachstumsfläche (10) der zweiten Vorrichtung und die Reaktorinnenwand des Reaktors (1) der ersten Vorrichtung die Gashydratwachstumsfläche (10) ersten Vorrichtung bilden, wobei erste Vorrichtung und zweite Vorrichtung eine gemeinsame Kühleinrichtung (5) aufweisen.
